# EUROPEAN PATENT APPLICATION

(11) **EP 4 838 752 A1**
(43) Date of publication of application: **11.11.2026**
(21) Application number: 25209270.5
(22) Date of filing: 16.10.2025
(51) Int. Cl.: H02J 9/06

(54) **METHOD AND APPARATUS FOR CONTROLLING UPS AND UPS**

(30) Priority: 09.05.2025 CN 202510596166
(71) Applicant: Vertiv Tech Co., Ltd., Guangdong 518055 (CN)
(72) Inventor: BING, Yang, Shenzhen, 518055 (CN); YANG, Guoshun, Shenzhen, 518055 (CN); WANG, Xunchao, Shenzhen, 518055 (CN)
(74) Representative: Bryn-Jacobsen, Caelia

(57) **Abstract**

A method and apparatus for controlling a UPS and a UPS are provided. The method includes: when it is determined that the bypass module in the UPS is operating normally and a current output power of the UPS is less than a preset power, controlling a part of the power modules in the UPS to operate in a harmonic compensation mode, controlling at least one power unit in the part of the power modules to be turned off, controlling all of a first-phase output terminal, a second-phase output terminal, and a third-phase output terminal of the part of the power modules after being connected in parallel to have outputs, and controlling the other power modules in the UPS to sleep. Compared to controlling all power units in the power modules operating in the harmonic compensation mode to be turned on, the operational efficiency of the UPS is improved.

## Description

The present application claims priority to Chinese Patent Application No. 202510596166.2, titled "METHOD AND APPARATUS FOR CONTROLLING UPS AND UPS", filed on May 9, 2025 with the China National Intellectual Property Administration.

### FIELD

The present disclosure relates to the field of power electronics, and in particular, relates to a method and an apparatus for controlling an uninterruptible power supply (UPS), and a UPS.

### BACKGROUND

With the development of data center industry, an uninterruptible power system (UPS), as a power supply device of a data center, plays a key role in safe and reliable operations of the data center. An existing UPS generally includes multiple power modules which are connected in parallel and a bypass module, where the power modules may achieve functions such as rectification and inversion. The bypass module may be directly connected between an input terminal and an output terminal of the UPS. An alternating current power source connected to the input terminal of the UPS may directly power a load through the bypass module.

When the bypass module of the UPS operates, that is, when the UPS is in a dynamic online mode, a part of the power modules of the UPS enter a sleep mode and do not supply power, while the other the power modules remain in an online mode and output harmonics. The outputted harmonics are used to compensate the electric energy supplied to the load, so as to improve the quality of electric energy.

When the UPS is in the dynamic online mode, a problem urgently to be addressed by those skilled in the art is how to improve the operational efficiency of the UPS.

### SUMMARY

A method and apparatus for controlling a UPS and a UPS are provided according to the present disclosure to address the problem in the prior art of how to improve the operational efficiency of a UPS when the UPS is in a dynamic online mode.

In a first aspect, a method for controlling a UPS is provided according to the present disclosure. The method is applied to a UPS including multiple power modules which are connected in parallel and a bypass module, and may include:
determining that the bypass module in the UPS is operating normally and a current output power of the UPS is less than a preset power; and
controlling a part of the power modules in the UPS to operate in a harmonic compensation mode, controlling at least one power unit in the part of the power modules to be turned off, controlling all of a first-phase output terminal, a second-phase output terminal, and a third-phase output terminal of the part of the power modules after being connected in parallel to have outputs, and controlling the other power modules in the UPS to sleep; where
the power unit includes an inverter or a rectifier.

In a possible implementation, at least one of the multiple power modules includes a first-phase sub-output terminal, a second-phase sub-output terminal, a third-phase sub-output terminal, and a power unit corresponding to a respective phase sub-output terminal, and the controlling at least one power unit in the part of the power modules to be turned off includes:
for any target power module in the part of the power modules, performing at least one of controlling the power unit corresponding to the first-phase sub-output terminal in the target power module to be turned off, and controlling the power unit corresponding to the second-phase sub-output terminal in the target power module to be turned off.

In a possible implementation, in a case where the power unit corresponding to the respective phase sub-output terminal includes multiple power units connected in parallel, the controlling at least one power unit in the part of the power modules to be turned off includes:
for a target power module in the part of the power modules including multiple power units connected in parallel, controlling at least one power unit corresponding to a target phase sub-output terminal in the target power module to be turned off, where the target phase sub-output terminal corresponds to multiple power units connected in parallel.

In a possible implementation, during a process of controlling the power unit corresponding to the first-phase sub-output terminal in the target power module to be turned off, the following steps are cyclically performed:
controlling the power unit corresponding to the second-phase sub-output terminal in the target power module to be turned on, controlling the power unit corresponding to the third-phase sub-output terminal in the target power module to be turned on, and controlling the power unit corresponding to the first-phase sub-output terminal in the target power module to be turned off;
controlling the power unit corresponding to the first-phase sub-output terminal in the target power module to be turned on, controlling the power unit corresponding to the third-phase sub-output terminal in the target power module to keep turned on, and controlling the power unit corresponding to the second-phase sub-output terminal in the target power module to be turned off; and
controlling the power unit corresponding to the second-phase sub-output terminal in the target power module to be turned on, controlling the power unit corresponding to the first-phase sub-output terminal in the target power module to keep turned on, and controlling the power unit corresponding to the third-phase sub-output terminal in the target power module to be turned off.

In a possible implementation, during a process of controlling the power unit corresponding to the first-phase sub-output terminal in the target power module to be turned off and controlling the power unit corresponding to the second-phase sub-output terminal in the target power module to be turned off, the following steps are cyclically performed:
controlling the power unit corresponding to the third-phase sub-output terminal in the target power module to be turned on, controlling the power unit corresponding to the first-phase sub-output terminal in the target power module to be turned off, and controlling the power unit corresponding to the second-phase sub-output terminal in the target power module to be turned off;
controlling the power unit corresponding to the first-phase sub-output terminal in the target power module to be turned on, controlling the power unit corresponding to the second-phase sub-output terminal in the target power module to keep turned off, and controlling the power unit corresponding to the third-phase sub-output terminal in the target power module to be turned off; and
controlling the power unit corresponding to the second-phase sub-output terminal in the target power module to be turned on, controlling the power unit corresponding to the third-phase sub-output terminal in the target power module to keep turned off, and controlling the power unit corresponding to the first-phase sub-output terminal in the target power module to be turned off.

In a possible implementation, the controlling a part of the power modules in the UPS to operate in a harmonic compensation mode includes:
controlling an inverter in the part of the power modules in the UPS to operate; or
controlling a rectifier in the part of the power modules in the UPS to operate.

In a possible implementation, the method further includes:
controlling a target heat-dissipation apparatus to be turned off, while performing at least one of controlling the power unit corresponding to the first-phase sub-output terminal in the target power module to be turned off and controlling the power unit corresponding to the second-phase sub-output terminal in the target power module to be turned off, where the target heat-dissipation apparatus is a heat-dissipation apparatus corresponding to a turned-off power unit.

In a second aspect, an apparatus for controlling a UPS is provided according to the present disclosure. The apparatus is applied to a UPS including multiple power modules which are connected in parallel and a bypass module, and may include:
at least one processor; and a memory communicatively connected to the at least one processor; where the memory stores instructions executable by the at least one processor, the instructions, when executed by the at least one processor, cause the at least one processor to perform the following steps:
determining that the bypass module in the UPS is operating normally and a current output power of the UPS is less than a preset power; and
controlling a part of the power modules in the UPS to operate in a harmonic compensation mode, controlling at least one power unit in the part of the power modules to be turned off, controlling all of a first-phase output terminal, a second-phase output terminal, and a third-phase output terminal of the part of the power modules after being connected in parallel to have outputs, and controlling the other power modules in the UPS to sleep; where
the power unit includes an inverter or a rectifier.

In a possible implementation, at least one of the multiple power modules includes a first-phase sub-output terminal, a second-phase sub-output terminal, a third-phase sub-output terminal, and a power unit corresponding to a respective phase sub-output terminal, and the processor is configured to:
for any target power module in the part of the power modules, perform at least one of
controlling the power unit corresponding to the first-phase sub-output terminal in the target power module to be turned off, and
controlling the power unit corresponding to the second-phase sub-output terminal in the target power module to be turned off.

In a possible implementation, in a case where the power unit corresponding to the respective phase sub-output terminal includes multiple power units connected in parallel, the processor is configured to:
for a target power module in the part of the power modules including multiple power units connected in parallel, control at least one power unit corresponding to a target phase sub-output terminal in the target power module to be turned off, where the target phase sub-output terminal corresponds to multiple power units connected in parallel.

In a possible implementation, during a process of controlling the power unit corresponding to the first-phase sub-output terminal in the target power module to be turned off, the processor cyclically performs the following steps:
controlling the power unit corresponding to the second-phase sub-output terminal in the target power module to be turned on, controlling the power unit corresponding to the third-phase sub-output terminal in the target power module to be turned on, and controlling the power unit corresponding to the first-phase sub-output terminal in the target power module to be turned off;
controlling the power unit corresponding to the first-phase sub-output terminal in the target power module to be turned on, controlling the power unit corresponding to the third-phase sub-output terminal in the target power module to keep turned on, and controlling the power unit corresponding to the second-phase sub-output terminal in the target power module to be turned off; and
controlling the power unit corresponding to the second-phase sub-output terminal in the target power module to be turned on, controlling the power unit corresponding to the first-phase sub-output terminal in the target power module to keep turned on, and controlling the power unit corresponding to the third-phase sub-output terminal in the target power module to be turned off.

In a possible implementation, during a process of controlling the power unit corresponding to the first-phase sub-output terminal in the target power module to be turned off and controlling the power unit corresponding to the second-phase sub-output terminal in the target power module to be turned off, the processor cyclically performs the following steps:
controlling the power unit corresponding to the third-phase sub-output terminal in the target power module to be turned on, controlling the power unit corresponding to the first-phase sub-output terminal in the target power module to be turned off, and controlling the power unit corresponding to the second-phase sub-output terminal in the target power module to be turned off;
controlling the power unit corresponding to the first-phase sub-output terminal in the target power module to be turned on, controlling the power unit corresponding to the second-phase sub-output terminal in the target power module to keep turned off, and controlling the power unit corresponding to the third-phase sub-output terminal in the target power module to be turned off; and
controlling the power unit corresponding to the second-phase sub-output terminal in the target power module to be turned on, controlling the power unit corresponding to the third-phase sub-output terminal in the target power module to keep turned off, and controlling the power unit corresponding to the first-phase sub-output terminal in the target power module to be turned off.

In a possible implementation, the processor is configure to:
control an inverter in the part of the power modules in the UPS to operate; or
control a rectifier in the part of the power modules in the UPS to operate.

In a possible implementation, the processor is further configure to:
control a target heat-dissipation apparatus to be turned off, while performing at least one of controlling the power unit corresponding to the first-phase sub-output terminal in the target power module to be turned off and controlling the power unit corresponding to the second-phase sub-output terminal in the target power module to be turned off, where the target heat-dissipation apparatus is a heat-dissipation apparatus corresponding to a turned-off power unit.

In a third aspect, a UPS is provided according to the present disclosure. The UPS includes a bypass module, multiple power modules connected in parallel, and any apparatus for controlling the UPS according to the second aspect.

The following beneficial effects are provided.

The method and apparatus for controlling the UPS, and the UPS are provided according to the present disclosure. The method includes: when it is determined that the bypass module in the UPS is operating normally and a current output power of the UPS is less than a preset power, controlling a part of the power modules in the UPS to operate in the harmonic compensation mode, controlling at least one power unit in the part of the power modules to be turned off, controlling all of a first-phase output terminal, a second-phase output terminal, and a third-phase output terminal of the part of the power modules after being connected in parallel to have outputs, and controlling the other power modules in the UPS to sleep; where the power unit includes an inverter or a rectifier. When the current output power of the UPS is less than the preset power, at least one power unit in the power modules operating in the harmonic compensation mode is controlled to be turned off, and all of the first-phase output terminal, the second-phase output terminal, and the third-phase output terminal of the part of the power modules after being connected in parallel are controlled to have outputs. Compared to controlling all power units in the power modules operating in the harmonic compensation mode to be turned on, power consumption is reduced, and the operational efficiency of the UPS is improved in the present disclosure.

In addition, in the examples of the present disclosure, when the current output power of the UPS is less than the preset power, at least one power unit in the power modules operating in the harmonic compensation mode is controlled to be turned off, and all of the first-phase output terminal, the second-phase output terminal, and the third-phase output terminal of the part of the power modules after being connected in parallel are controlled to have outputs, thereby guaranteeing normal harmonic compensation, and normal operation of the UPS.

### BRIEF DESCRIPTION OF THE DRAWINGS

In order to clearly illustrate technical solutions in the examples of the present disclosure, the accompanying drawings used in the description of the examples are briefly described below. It is apparent that the accompanying drawings in the following description are only for some of the examples of the present disclosure. For those skilled in the art, other drawings can be obtained based on the provided accompanying drawings without creative efforts.
FIG. 1 is a schematic structural diagram of a UPS according to an example of the present disclosure;
FIG. 2 is a schematic structural diagram of a power module according to an example of the present disclosure;
FIG. 3 is a schematic flowchart of a method for controlling a UPS according to an example of the present disclosure;
FIG. 4 is a schematic structural diagram of another power module according to an example of the present disclosure;
FIG. 5 is a schematic structural diagram of another power module according to an example of the present disclosure;
FIG. 6 is a schematic structural diagram of another power module according to an example of the present disclosure; and
FIG. 7 is a schematic structural diagram of an apparatus for controlling a UPS according to an example of the present disclosure.

### DETAILED DESCRIPTION

In order to make the objects, technical solutions and advantages of the present disclosure clearer, the present disclosure will be further described in detail below in conjunction with the accompanying drawings. Apparently, the described examples are only some rather than all examples of the present disclosure. All other examples obtained by those skilled in the art based on the examples of the present disclosure without any creative work fall in the protection scope of the present disclosure.

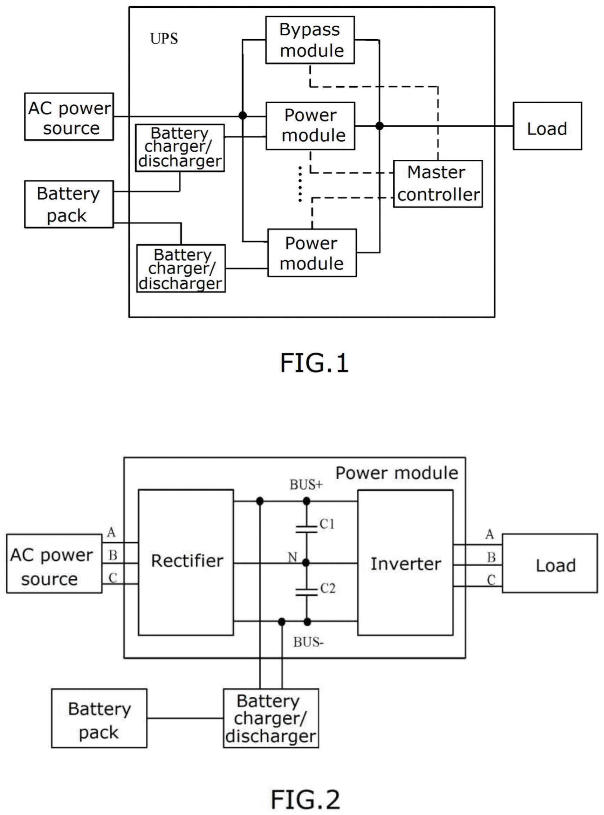

FIG. 1 is a schematic structural diagram of a UPS according to an example of the present disclosure. The UPS includes multiple power modules connected in parallel, a bypass module, a master controller, and a battery charger/discharger. The master controller controls operations of the modules (including the bypass module, the power modules, the battery charger/discharger, or the like). The structure of the power modules may be referred to FIG. 2. As shown in FIG. 2, each power module includes a rectifier, a direct-current (DC) bus, and an inverter connected in sequence, and also a bus capacitor C1 and a bus capacitor C2, where BUS+ represents a high-level potential of the DC bus, and BUS- represents a low-level potential of the DC bus.

The power module may be connected to an external battery pack or to a battery pack arranged inside the UPS. The battery charger/discharger in the UPS may perform voltage regulation so as to achieve the conversion between the bus voltage of the power module and the charging voltage of the battery. For example, when the battery pack needs to be charged, the battery charger/discharger may lower the bus voltage of the DC bus in the power module to charge the battery pack. When the alternating current (AC) power source connected to the UPS fails, the battery charger/discharger may raise the voltage of the battery pack to supply the DC bus, and the power module may then power the load connected to the output of the UPS with the electric energy from the DC bus, thereby achieving the uninterrupted power supply function of the UPS.

It should be noted that, according to the example of the present disclosure, an example that the power modules and the bypass module share the same AC power source is described. In practice, the bypass module and the power modules may be powered by separate AC power sources, and it is not limited in the present disclosure.

It should also be noted that the structure of the UPS shown in FIG. 1 is merely an example. In practice, the UPS may further include other devices, for example, a circuit breaker connected between the UPS and an external AC power source.

The UPS shown in FIG. 1 may operate in two power supply modes, namely a bypass power supply mode (dynamic online mode) and a power module power supply mode. In the bypass power supply mode, a part of the power modules in the UPS are activated to perform harmonic compensation for the output voltage of the bypass module so as to ensure the stability of the output electric energy of the UPS, while the other power modules are in a sleep mode to improve the efficiency of the UPS. In the power module power supply mode, the bypass module stops operating, and all of the power modules operate to convert electric energy from the external power source to power the load.

In the bypass power supply mode, the part of the power modules are in the harmonic compensation mode. Since all power units in the power modules operating in the harmonic compensation mode operate, power consumption is high and thus results in a problem of low operational efficiency of the UPS.

Based on the above problem, a method and apparatus for controlling a UPS and a UPS are provided according to the examples of the present disclosure, which is described in detail below in conjunction with the examples.

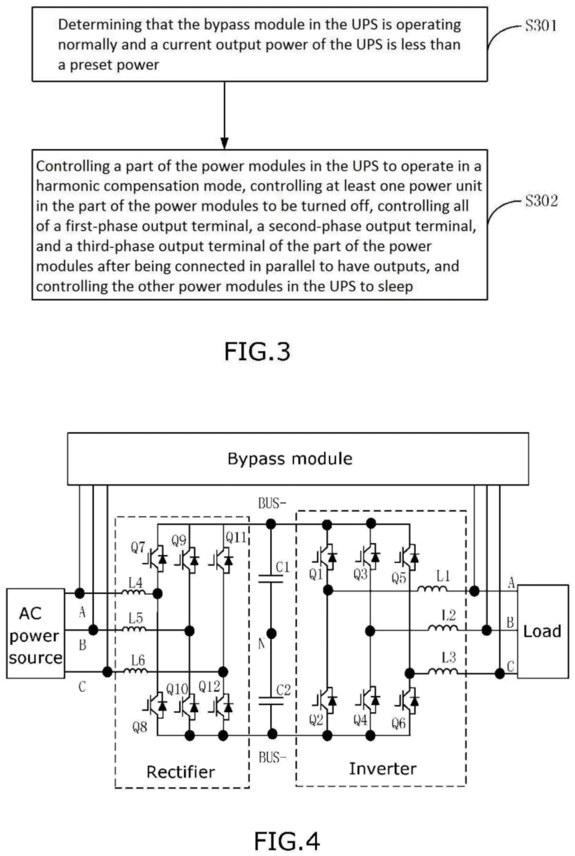

Referring to FIG. 3, which is a schematic flowchart of a method for controlling a UPS according to an example of the present disclosure. The method for controlling the UPS may be applied to the UPS shown in FIG. 1 and may be performed by the master controller in the UPS. In some implementations, each power module may be internally provided with a slave controller, the master controller may be connected to the slave controller in the power module and control the operation of the power unit (a rectifier or an inverter) via the slave controller. As shown in FIG. 3, the method includes the following steps S301 and S302.

At S301, it is determined that the bypass module in the UPS is operating normally and a current output power of the UPS is less than a preset power.

At S302, a part of the power modules in the UPS are controlled to operate in a harmonic compensation mode, at least one power unit in the part of the power modules is controlled to be turned off, all of a first-phase output terminal, a second-phase output terminal, and a third-phase output terminal of the part of the power modules after being connected in parallel are controlled to have outputs, and the other power modules in the UPS are controlled to sleep; where the power unit includes an inverter or a rectifier.

In the example of the present disclosure, when it is determined that the bypass module in the UPS is operating normally and the current output power of the UPS is less than the preset power, a part of the power modules in the UPS are controlled to operate in the harmonic compensation mode, at least one power unit in the part of the power modules is controlled to be turned off, all of the first-phase output terminal, the second-phase output terminal, and the third-phase output terminal of the part of the power modules after being connected in parallel are controlled to have outputs, and the other power modules in the UPS are controlled to sleep; where the power unit includes an inverter or a rectifier. When the current output power of the UPS is less than the preset power, at least one power unit in the power modules operating in the harmonic compensation mode is controlled to be turned off, and all of the first-phase output terminal, the second-phase output terminal, and the third-phase output terminal of the part of the power modules after being connected in parallel are controlled to have outputs. Compared to controlling all power units in the power modules operating in the harmonic compensation mode to be turned on, power consumption is reduced, and the operational efficiency of the UPS is improved in the present disclosure.

In addition, in the example of the present disclosure, when the current output power of the UPS is less than the preset power, at least one power unit in the power modules operating in the harmonic compensation mode is controlled to be turned off, and all of the first-phase output terminal, the second-phase output terminal, and the third-phase output terminal of the part of the power modules after being connected in parallel are controlled to have outputs, thereby guaranteeing normal harmonic compensation, and normal power supply to the load from the UPS.

The current output power of the UPS in the example of the present disclosure refers to the load power of the load connected to the UPS. When the UPS supplies power to the load, in order to ensure normal power supply to the load, generally a threshold is set, so that the power provided by the UPS equals the sum of the load power and the threshold. For example, if the load power is 600 kVA and the threshold is 200 kVA, the UPS is required to supply power of 600 kVA + 200kVA to ensure normal operation of the load.

The preset power in the example of the present disclosure may be the difference between the total power of the UPS and the threshold. For example, if the total power of the UPS is 1000 kVA and the threshold is 200 kVA, the preset power is: 1000 kVA - 200 kVA = 800 kVA. If the current output power of the UPS is 600 kVA, that is, the load power of the load connected to the UPS is 600 kVA, the current output power of the UPS is 600 kVA, which is less than the preset power of 800 kVA.

Referring to FIG. 2, the first-phase output terminal, the second-phase output terminal and the third-phase output terminal in the example of the present disclosure refer to a phase-A output terminal, a phase-B output terminal, and a phase-C output terminal.

It should be noted that the first-phase does not necessarily refer to phase-A, but refers to any one of phase-A, phase-B, and phase-C. The second-phase does not necessarily refer to phase-B, but refers to any one of phase-A, phase-B, and phase-C. Likewise, the third-phase does not necessarily refer to phase-C, but refers to any one of phase-A, phase-B, and phase-C. The first-phase, the second-phase, and the third-phase should be different from each other. For example, the first-phase may be phase-A, the second-phase may be phase-B, and the third-phase may be phase-C; or the first-phase may be phase-A, the second-phase may be phase-C, and the third-phase may be phase-B. For example, the first-phase may be phase-B, the second-phase may be phase-A, and the third-phase may be phase-C; or the first-phase may be phase-B, the second-phase may be phase-C, and the third-phase may be phase-A.

In the example of the present disclosure, when the power unit is an inverter, the first-phase output terminal, the second-phase output terminal, and the third-phase output terminal are the phase-A output terminal, phase-B output terminal, and phase-C output terminal of the inverter in the power modules operating in the harmonic compensation mode. When the power unit is a rectifier, the first-phase output terminal, the second-phase output terminal, and the third-phase output terminal are the phase-A output terminal, phase-B output terminal, and phase-C output terminal of the rectifier in the power modules operating in the harmonic compensation mode.

Reference is made to FIG. 4, which is a schematic structural diagram of a power module according to an example of the present disclosure. As can be seen from FIG. 4, the rectifier in the power module includes an inductor and a switching transistor, and the inverter in the power module also includes an inductor and a switching transistor.

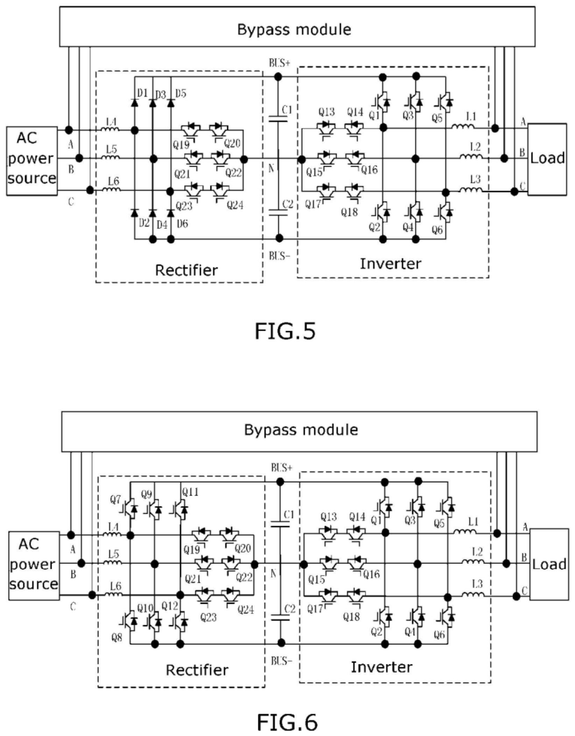

Reference is made to FIG. 5, which is a schematic structural diagram of another power module according to an example of the present disclosure. As can be seen from FIG. 5, the rectifier in the power module includes an inductor, a diode and a switching transistor, and the inverter in the power module includes an inductor and a switching transistor.

Reference is made to FIG. 6, which is a schematic structural diagram of another power module according to an example of the present disclosure. As can be seen from FIG. 6, the rectifier in the power module includes an inductor and a switching transistor, and the inverter in the power module also includes an inductor and a switching transistor.

It should be noted that the structures of the rectifier and inverter in the power modules shown in FIG. 4, FIG. 5 and FIG. 6 are merely examples. In practice, the rectifier and the inverter in the power module may have other structures, which is not limited in the examples of the present disclosure.

In some implementations, controlling a part of the power modules in the UPS to operate in a harmonic compensation mode may control the operation of an inverter in the part of the power modules, or control the operation of a rectifier in the part of the power modules.

When controlling the inverter in the part of the power modules to operate, the inverter may be controlled to perform rectification or inversion. That is, when the inverter operates in the harmonic compensation mode, both functions of absorbing and outputting electric energy can be implemented, and the bus capacitors are supplied. When controlling the rectifier in the part of the power modules to operate, the rectifier is controlled to perform rectification. In practice, whether to choose a rectifier or an inverter for rectification may be determined depending on their respective conversion efficiencies. For example, if the rectifier has a higher conversion efficiency than that of the inverter, the rectifier may be used for rectification. For example, if the inverter has a higher conversion efficiency than that of the rectifier, the inverter may be used for rectification.

In the examples of the present disclosure, each power module includes three output terminals, a first-phase sub-output terminal, a second-phase sub-output terminal, and a third-phase sub-output terminal. If the power unit is an inverter, the first-phase sub-output terminal, the second-phase sub-output terminal, and the third-phase sub-output terminal are a phase-A output terminal, a phase-B output terminal, and a phase-C output terminal of the inverter in the power module. If the power unit is a rectifier, the first-phase sub-output terminal, the second-phase sub-output terminal, and the third-phase sub-output terminal are the phase-A output terminal, the phase-B output terminal, and the phase-C output terminal of the rectifier in the power module.

It should be noted that in the examples of the present disclosure, the first-phase does not necessarily refer to phase-A, but refers to any one of phase-A, phase-B, and phase-C. The second-phase does not necessarily refer to phase-B, but refers to any one of phase-A, phase-B, and phase-C. Likewise, the third-phase does not necessarily refer to phase-C, but refers to any one of phase-A, phase-B, and phase-C. In addition, the first-phase, the second-phase, and the third-phase should be different from each other.

In addition to the first-phase sub-output terminal, the second-phase sub-output terminal, and the third-phase sub-output terminal, the power module includes a power unit corresponding to the first-phase sub-output terminal, a power unit corresponding to the second-phase sub-output terminal, and a power unit corresponding to the third-phase sub-output terminal. Specifically, a phase sub-output terminal may correspond to a single power unit or multiple power units connected in parallel, as described below.

In an example, if a phase sub-output terminal of the power module corresponds to a single power unit, controlling at least one power unit in a part of the power modules to be turned off refers to: for any target power module in the part of the power modules, performing at least one of controlling the power unit corresponding to the first-phase sub-output terminal in the target power module to be turned off, and controlling the power unit corresponding to the second-phase sub-output terminal in the target power module to be turned off.

For example, the power modules operating in a harmonic compensation mode include power module 1, power module 2, and power module 3. In power module 1, the power unit corresponding to phase-B and the power unit corresponding to phase-C are turned on, and the power unit corresponding to the phase-A output terminal is turned off. In power module 2, the power unit corresponding to phase-A and the power unit corresponding to phase-C are turned on, and the power unit corresponding to phase-B is turned off. In power module 3, the power unit corresponding to phase-A and the power unit corresponding to phase-B are turned on, and the power unit corresponding to phase-C is turned off.

As another example, the power modules operating in a harmonic compensation mode include power module 1, power module 2, and power module 3. In power module 1, the power unit corresponding to phase-A is turned on, the power unit corresponding to phase-B and the power unit corresponding to phase-C are turned off. In power module 2, the power unit corresponding to the phase-B is turned on, the power unit corresponding to phase-A and the power unit corresponding to phase-C are turned off. In power module 3, the power unit corresponding to the phase-C is turned on, the power unit corresponding to phase-A and the power unit corresponding to phase-B are turned off.

In the examples of the present disclosure, to ensure uniform temperature distribution among all power units and improve the life-span and reliability of the inverters, the following steps are cyclically performed during a process of controlling the power unit corresponding to the first-phase sub-output terminal in the target power module to be turned off in some examples.

The power unit corresponding to the second-phase sub-output terminal in the target power module is controlled to be turned on, the power unit corresponding to the third-phase sub-output terminal is controlled to be turned on, and the power unit corresponding to the first-phase sub-output terminal is controlled to be turned off; the power unit corresponding to the first-phase sub-output terminal in the target power module is controlled to be turned on, the power unit corresponding to the third-phase sub-output terminal is controlled to be turned on, and the power unit corresponding to the second-phase sub-output terminal is controlled to be turned off; and the power unit corresponding to the first-phase sub-output terminal in the target power module is controlled to be turned on, the power unit corresponding to the second-phase sub-output terminal is controlled to be turned on, and the power unit corresponding to the third-phase sub-output terminal is controlled to be turned off.

In the examples of the present disclosure, when the power units in the target power module are turned on or off, to ensure sufficient power supply, the power units should be turned on first and then turned off. For example, the power unit corresponding to the second-phase sub-output terminal in the target power module and the power unit corresponding to the third-phase sub-output terminal in the target power module are controlled to be turned on first, and then the power unit corresponding to the first-phase sub-output terminal in the target power module is controlled to be turned off.

In practice, when the power units in the target power module are cyclically turned on and off, the other power modules connected in parallel should operate in coordination to ensure that each phase has sufficient operational power units to supply power.

In another example, during a process of controlling the power unit corresponding to the first-phase sub-output terminal in the target power module to be turned off and controlling the power unit corresponding to the second-phase sub-output terminal in the target power module to be turned off, the following steps are cyclically performed.

The power unit corresponding to the third-phase sub-output terminal in the target power module is controlled to be turned on, the power unit corresponding to the first-phase sub-output terminal is controlled to be turned off, and the power unit corresponding to the second-phase sub-output terminal is controlled to be turned off; the power unit corresponding to the first-phase sub-output terminal in the target power module is controlled to be turned on, the power unit corresponding to the second-phase sub-output terminal is controlled to be turned off, and the power unit corresponding to the third-phase sub-output terminal is controlled to be turned off; and the power unit corresponding to the second-phase sub-output terminal in the target power module is controlled to be turned on, the power unit corresponding to the third-phase sub-output terminal is controlled to be turned off, and the power unit corresponding to the first-phase sub-output terminal is controlled to be turned off.

Similarly, in the examples of the present disclosure, when the power units in the target power module are turned on or off, to ensure sufficient power supply, the power units should be turned on first and then turned off. For example, the power unit corresponding to the third-phase sub-output terminal in the target power module is controlled to be turned on first, the power unit corresponding to the first-phase sub-output terminal in the target power module is then controlled to be turned off, and finally the power unit corresponding to the second-phase sub-output terminal in the target power module is controlled to be turned off.

In practice, when the power units in the target power module are cyclically turned on and off, the other power modules connected in parallel should operate in coordination to ensure that each phase has sufficient operational power units to supply power.

In another example, when power units corresponding to respective phase sub-output terminals include multiple power units connected in parallel, at least one power unit in the part of the power modules is controlled to be turned off. For a target power module including multiple power units connected in parallel among the part of the power modules, at least one of the power units corresponding to a target phase sub-output terminal in the target power module is controlled to be turned off, where the target phase sub-output terminal corresponds to multiple power units connected in parallel.

For example, the power modules operating in the harmonic compensation mode include power module 1, power module 2, and power module 3. In power module 1, the phase-A sub-output terminal corresponds to three power units connected in parallel, the phase-B sub-output terminal corresponds to three power units connected in parallel, and the phase-C sub-output terminal corresponds to three power units connected in parallel. When controlling at least one power unit in the power modules operating in the harmonic compensation mode to be turned off, one power unit corresponding to the phase-A sub-output terminal in the power module 1 may be turned on, while the other two power units connected in parallel which correspond to the phase-A sub-output terminal in the power module 1 are turned off; one power unit corresponding to the phase-B sub-output terminal in the power module 1 may be turned on, while the other two power units connected in parallel which correspond to the phase-B sub-output terminal in the power module 1 are turned off; and one power unit corresponding to the phase-C sub-output terminal in the power module 1 may be turned on, while the other two power units connected in parallel which correspond to the phase-C sub-output terminal in the power module 1 are turned off.

In the examples of the present disclosure, when the UPS is in the dynamic online mode, a part of the power units are turned off to reduce power loss and improve the efficiency of the UPS.

Similarly, in the examples of the present disclosure, when the power units in the target power module are turned on or off, to ensure sufficient power supply, the power units in the target power module required to be turned on should be turned on first and then the power units in the target power module required to be turned off are turned off.

In an example, a target heat-dissipation apparatus is controlled to be turned off, while performing at least one of controlling the power unit corresponding to the first-phase sub-output terminal in the target power module to be turned off and controlling the power unit corresponding to the second-phase sub-output terminal in the target power module to be turned off, where the target heat-dissipation apparatus is a heat-dissipation apparatus corresponding to a turned-off power unit.

The heat-dissipation apparatus according to the example of the present disclosure may include, but is not limited to, a heat-dissipation fan, a water cooling loop, or other heat-dissipation apparatuses that consume energy.

In practice, each power unit corresponds to a heat-dissipation apparatus. By turning off the heat-dissipation apparatus corresponding to the power unit at the same time as turning off the power unit, power consumption can be further reduced and the efficiency of the UPS is improved.

Based on the same concept, an apparatus for controlling a UPS is further provided in an example of the present disclosure. The principle of solving the technical problem by the apparatus for controlling the UPS is similar to the principle of solving the technical problem by the method for controlling the UPS. The implementation of the apparatus for controlling the UPS may refer to the implementation of the method for controlling the UPS, and details are not repeated herein.

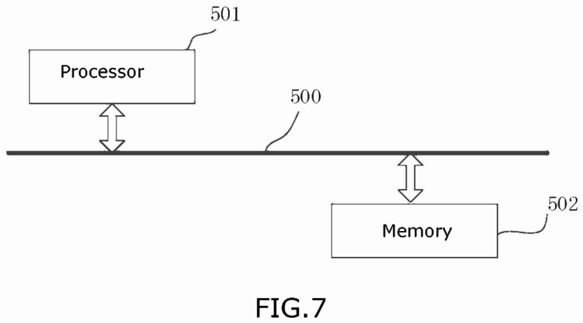

Reference is made to FIG. 7, which shows an apparatus 500 for controlling a UPS according to an example of the present disclosure. The apparatus 500 is applied to a UPS including multiple power modules which are connected in parallel and a bypass module, and may include:
at least one processor 501; and a memory 502 communicatively connected to the at least one processor 501; where the memory 502 stores instructions executable by the at least one processor 501, the instructions, when executed by the at least one processor 501, cause the at least one processor 501 to perform the following steps:
determining that the bypass module in the UPS is operating normally and a current output power of the UPS is less than a preset power; and
controlling a part of the power modules in the UPS to operate in a harmonic compensation mode, controlling at least one power unit in the part of the power modules to be turned off, controlling all of a first-phase output terminal, a second-phase output terminal, and a third-phase output terminal of the part of the power modules after being connected in parallel to have outputs, and controlling the other power modules in the UPS to sleep; where
the power unit includes an inverter or a rectifier.

In an example, the power module includes a first-phase sub-output terminal, a second-phase sub-output terminal, a third-phase sub-output terminal, and a power unit corresponding to a respective phase sub-output terminal. The processor 501 is configured to:
for any target power module in the part of the power modules, perform at least one of controlling the power unit corresponding to the first-phase sub-output terminal in the target power module to be turned off, and controlling the power unit corresponding to the second-phase sub-output terminal in the target power module to be turned off.

In an example, in a case where the power unit corresponding to the respective phase sub-output terminal includes multiple power units connected in parallel, the processor 501 is configured to:
for a target power module in the part of the power modules including multiple power units connected in parallel, control at least one power unit corresponding to a target phase sub-output terminal in the target power module to be turned off, where the target phase sub-output terminal corresponds to multiple power units connected in parallel.

In an example, during a process of controlling the power unit corresponding to the first-phase sub-output terminal in the target power module to be turned off, the processor 501 cyclically performs the following steps:
controlling the power unit corresponding to the second-phase sub-output terminal in the target power module to be turned on, controlling the power unit corresponding to the third-phase sub-output terminal in the target power module to be turned on, and controlling the power unit corresponding to the first-phase sub-output terminal in the target power module to be turned off;
controlling the power unit corresponding to the first-phase sub-output terminal in the target power module to be turned on, controlling the power unit corresponding to the third-phase sub-output terminal in the target power module to keep turned on, and controlling the power unit corresponding to the second-phase sub-output terminal in the target power module to be turned off; and
controlling the power unit corresponding to the second-phase sub-output terminal in the target power module to be turned on, controlling the power unit corresponding to the first-phase sub-output terminal in the target power module to keep turned on, and controlling the power unit corresponding to the third-phase sub-output terminal in the target power module to be turned off.

In an example, during a process of controlling the power unit corresponding to the first-phase sub-output terminal in the target power module to be turned off and controlling the power unit corresponding to the second-phase sub-output terminal in the target power module to be turned off, the processor 501 cyclically performs the following steps:
controlling the power unit corresponding to the third-phase sub-output terminal in the target power module to be turned on, controlling the power unit corresponding to the first-phase sub-output terminal in the target power module to be turned off, and controlling the power unit corresponding to the second-phase sub-output terminal in the target power module to be turned off;
controlling the power unit corresponding to the first-phase sub-output terminal in the target power module to be turned on, controlling the power unit corresponding to the second-phase sub-output terminal in the target power module to keep turned off, and controlling the power unit corresponding to the third-phase sub-output terminal in the target power module to be turned off; and
controlling the power unit corresponding to the second-phase sub-output terminal in the target power module to be turned on, controlling the power unit corresponding to the third-phase sub-output terminal in the target power module to keep turned off, and controlling the power unit corresponding to the first-phase sub-output terminal in the target power module to be turned off.

In an example, the processor 501 is configured to:
control an inverter in the part of the power modules in the UPS to operate; or
control a rectifier in the part of the power modules in the UPS to operate.

In an example, the processor 501 is further configured to:
control a target heat-dissipation apparatus to be turned off, while performing at least one of controlling the power unit corresponding to the first-phase sub-output terminal in the target power module to be turned off and controlling the power unit corresponding to the second-phase sub-output terminal in the target power module to be turned off, where the target heat-dissipation apparatus is a heat-dissipation apparatus corresponding to a turned-off power unit.

Based on the same concept, a UPS is further provided in an example of the present disclosure. The principle of solving the technical problem by the UPS is similar to the principle of solving the technical problem by the apparatus for controlling the UPS. The implementation of the UPS may refer to the implementation of the apparatus for controlling the UPS, and details are not repeated herein.

A UPS is further provided according to the present disclosure. The UPS includes a bypass module, multiple power modules connected in parallel, and any apparatus for controlling the UPS described above.

In the method and apparatus for controlling the UPS and the UPS according to the present disclosure, when it is determined that the bypass module in the UPS is operating normally and the current output power of the UPS is less than a preset power, a part of the power modules in the UPS are controlled to operate in the harmonic compensation mode, at least one power unit in the part of the power modules is controlled to be turned off, the first-phase output terminal, the second-phase output terminal, and all of the third-phase output terminal of the part of the power modules after being connected in parallel are controlled to have outputs, and the other power modules in the UPS are controlled to sleep; where the power unit includes an inverter or a rectifier. When the current output power of the UPS is less than the preset power, at least one power unit in the power modules operating in the harmonic compensation mode is controlled to be turned off, and all of the first-phase output terminal, the second-phase output terminal, and the third-phase output terminal of the part of the power modules after being connected in parallel are controlled to have outputs. Compared to controlling all power units in the power modules operating in the harmonic compensation mode to be turned on, power consumption is reduced, and the operational efficiency of the UPS is improved in the present disclosure.

In addition, in the examples of the present disclosure, when the current output power of the UPS is less than the preset power, at least one power unit in the power modules operating in the harmonic compensation mode is controlled to be turned off, and all of the first-phase output terminal, the second-phase output terminal, and the third-phase output terminal of the part of the power modules after being connected in parallel are controlled to have outputs, thereby guaranteeing normal harmonic compensation, and normal operation of the UPS.

The present disclosure is described above with reference to the method, the apparatus (system) and/or the block diagrams and/or flowcharts of the computer program product according to examples of the present disclosure. It should be understood that one block or combinations of blocks of the block diagrams and/or flowchart illustrations can be implemented by computer program instructions. These computer program instructions may be provided to a processor of a general purpose computer, a processor of a special purpose computer and/or other programmable data processing apparatus to produce a machine such that instructions executed via the computer processor and/or other programmable data processing apparatus create a means of implementing the functions/acts specified in the block diagrams and/or flowchart blocks.

Accordingly, the present disclosure may also be implemented in hardware and/or software (including firmware, resident software, microcode, or the like). Furthermore, the present disclosure may take the form of a computer program product on a computer-usable or computer-readable storage medium, where the computer program product has computer-usable or computer-readable program codes embodied in the medium, so that the program codes can be used by an instruction execution system or in conjunction with the instruction execution system. In the context of the present disclosure, the computer-usable or computer-readable medium may be any medium that may contain, store, communicate, transmit, or convey a program for use by, or in connection with, an instruction execution system, apparatus, or device.

Further examples are set out in the clauses below:
1. A method for controlling an uninterruptible power supply, UPS, wherein the method is applied to a UPS comprising a plurality of power modules which are connected in parallel and a bypass module, the method comprising:
   determining that the bypass module in the UPS is operating normally and a current output power of the UPS is less than a preset power; and
   controlling a part of the power modules in the UPS to operate in a harmonic compensation mode, controlling at least one power unit in the part of the power modules to be turned off, controlling all of a first-phase output terminal, a second-phase output terminal, and a third-phase output terminal of the part of the power modules after being connected in parallel to have outputs, and controlling the other power modules in the UPS to sleep;
   wherein, the power unit comprises an inverter or a rectifier.
2. The method according to clause 1, wherein the power module comprises a first-phase sub-output terminal, a second-phase sub-output terminal, a third-phase sub-output terminal, and a power unit corresponding to a respective phase sub-output terminal, and the controlling at least one power unit in the part of the power modules to be turned off comprises:
   for any target power module in the part of the power modules, performing at least one of controlling the power unit corresponding to the first-phase sub-output terminal in the target power module to be turned off, and controlling the power unit corresponding to the second-phase sub-output terminal in the target power module to be turned off.
3. The method according to clause 2, wherein, in a case where the power unit corresponding to the respective phase sub-output terminal comprises a plurality of power units connected in parallel, the controlling at least one power unit in the part of the power modules to be turned off comprises:
   for a target power module in the part of the power modules comprising the plurality of power units connected in parallel, controlling at least one power unit corresponding to a target phase sub-output terminal in the target power module to be turned off, wherein the target phase sub-output terminal corresponds to the plurality of power units connected in parallel.
4. The method according to clause 2, wherein, during a process of controlling the power unit corresponding to the first-phase sub-output terminal in the target power module to be turned off, the following steps are cyclically performed:
   controlling the power unit corresponding to the second-phase sub-output terminal in the target power module to be turned on, controlling the power unit corresponding to the third-phase sub-output terminal in the target power module to be turned on, and controlling the power unit corresponding to the first-phase sub-output terminal in the target power module to be turned off;
   controlling the power unit corresponding to the first-phase sub-output terminal in the target power module to be turned on, controlling the power unit corresponding to the third-phase sub-output terminal in the target power module to keep turned on, and controlling the power unit corresponding to the second-phase sub-output terminal in the target power module to be turned off; and
   controlling the power unit corresponding to the second-phase sub-output terminal in the target power module to be turned on, controlling the power unit corresponding to the first-phase sub-output terminal in the target power module to keep turned on, and controlling the power unit corresponding to the third-phase sub-output terminal in the target power module to be turned off.
5. The method according to clause 2, wherein, during a process of controlling the power unit corresponding to the first-phase sub-output terminal in the target power module to be turned off and controlling the power unit corresponding to the second-phase sub-output terminal in the target power module to be turned off, the following steps are cyclically performed:
   controlling the power unit corresponding to the third-phase sub-output terminal in the target power module to be turned on, controlling the power unit corresponding to the first-phase sub-output terminal in the target power module to be turned off, and controlling the power unit corresponding to the second-phase sub-output terminal in the target power module to be turned off;
   controlling the power unit corresponding to the first-phase sub-output terminal in the target power module to be turned on, controlling the power unit corresponding to the second-phase sub-output terminal in the target power module to keep turned off, and controlling the power unit corresponding to the third-phase sub-output terminal in the target power module to be turned off; and
   controlling the power unit corresponding to the second-phase sub-output terminal in the target power module to be turned on, controlling the power unit corresponding to the third-phase sub-output terminal in the target power module to keep turned off, and controlling the power unit corresponding to the first-phase sub-output terminal in the target power module to be turned off.
6. The method according to any one of clauses 1 to 5, wherein the controlling a part of the power modules in the UPS to operate in a harmonic compensation mode comprises:
   controlling an inverter in the part of the power modules in the UPS to operate; or
   controlling a rectifier in the part of the power modules in the UPS to operate.
7. The method according to clause 2, further comprising:
   controlling a target heat-dissipation apparatus to be turned off, while performing at least one of controlling the power unit corresponding to the first-phase sub-output terminal in the target power module to be turned off and controlling the power unit corresponding to the second-phase sub-output terminal in the target power module to be turned off, wherein the target heat-dissipation apparatus is a heat-dissipation apparatus corresponding to a turned-off power unit.
8. An apparatus for controlling a UPS, wherein the apparatus is applied to a UPS comprising a plurality of power modules which are connected in parallel and a bypass module, the apparatus comprising:
   at least one processor; and a memory communicatively connected to the at least one processor; wherein the memory stores instructions executable by the at least one processor, the instructions, when executed by the at least one processor, cause the at least one processor to perform the following steps:
   determining that the bypass module in the UPS is operating normally and a current output power of the UPS is less than a preset power; and
   controlling a part of the power modules in the UPS to operate in a harmonic compensation mode, controlling at least one power unit in the part of the power modules to be turned off, controlling all of a first-phase output terminal, a second-phase output terminal, and a third-phase output terminal of the part of the power modules after being connected in parallel to have outputs, and controlling the other power modules in the UPS to sleep;
   wherein the power unit comprises an inverter or a rectifier.
9. The apparatus according to clause 8, wherein the power module comprises a first-phase sub-output terminal, a second-phase sub-output terminal, a third-phase sub-output terminal, and a power unit corresponding to a respective phase sub-output terminal, and the processor is configured to:
   for any target power module in the part of the power modules, perform at least one of controlling the power unit corresponding to the first-phase sub-output terminal in the target power module to be turned off, and controlling the power unit corresponding to the second-phase sub-output terminal in the target power module to be turned off.
10. The apparatus according to clause 9, wherein, in a case where the power unit corresponding to the respective phase sub-output terminal comprises a plurality of power units connected in parallel, the processor is configured to:
   for a target power module in the part of the power modules comprising the plurality of power units connected in parallel, control at least one power unit corresponding to a target phase sub-output terminal in the target power module to be turned off, wherein the target phase sub-output terminal corresponds to the plurality of power units connected in parallel.
11. The apparatus according to clause 9, wherein, during a process of controlling the power unit corresponding to the first-phase sub-output terminal in the target power module to be turned off, the processor cyclically performs the following steps:
   controlling the power unit corresponding to the second-phase sub-output terminal in the target power module to be turned on, controlling the power unit corresponding to the third-phase sub-output terminal in the target power module to be turned on, and controlling the power unit corresponding to the first-phase sub-output terminal in the target power module to be turned off;
   controlling the power unit corresponding to the first-phase sub-output terminal in the target power module to be turned on, controlling the power unit corresponding to the third-phase sub-output terminal in the target power module to keep turned on, and controlling the power unit corresponding to the second-phase sub-output terminal in the target power module to be turned off; and
   controlling the power unit corresponding to the second-phase sub-output terminal in the target power module to be turned on, controlling the power unit corresponding to the first-phase sub-output terminal in the target power module to keep turned on, and controlling the power unit corresponding to the third-phase sub-output terminal in the target power module to be turned off.
12. The apparatus according to clause 9, wherein, during a process of controlling the power unit corresponding to the first-phase sub-output terminal in the target power module to be turned off and controlling the power unit corresponding to the second-phase sub-output terminal in the target power module to be turned off, the processor cyclically performs the following steps:
   controlling the power unit corresponding to the third-phase sub-output terminal in the target power module to be turned on, controlling the power unit corresponding to the first-phase sub-output terminal in the target power module to be turned off, and controlling the power unit corresponding to the second-phase sub-output terminal in the target power module to be turned off;
   controlling the power unit corresponding to the first-phase sub-output terminal in the target power module to be turned on, controlling the power unit corresponding to the second-phase sub-output terminal in the target power module to keep turned off, and controlling the power unit corresponding to the third-phase sub-output terminal in the target power module to be turned off; and
   controlling the power unit corresponding to the second-phase sub-output terminal in the target power module to be turned on, controlling the power unit corresponding to the third-phase sub-output terminal in the target power module to keep turned off, and controlling the power unit corresponding to the first-phase sub-output terminal in the target power module to be turned off.
13. The apparatus according to any one of clauses 8 to 12, wherein the processor is configured to:
   control an inverter in the part of the power modules in the UPS to operate; or
   control a rectifier in the part of the power modules in the UPS to operate.
14. The apparatus according to any one of clauses 9-13, wherein the processor is further configured to:
   control a target heat-dissipation apparatus to be turned off, while performing at least one of controlling the power unit corresponding to the first-phase sub-output terminal in the target power module to be turned off and controlling the power unit corresponding to the second-phase sub-output terminal in the target power module to be turned off, wherein the target heat-dissipation apparatus is a heat-dissipation apparatus corresponding to a turned-off power unit.
15. A UPS, comprising a bypass module, a plurality of power modules connected in parallel, and the apparatus for controlling the UPS according to any one of clauses 8 to 14.

Apparently, those skilled in the art may make various changes and variations to the present disclosure without departing from the scope of the present disclosure. Hence, as the modifications and variations of the present disclosure fall within the scope of the claims of the present disclosure and equivalents thereof, the present disclosure is also intended to include such modifications and variations.

## Claims

1. A method for controlling an uninterruptible power supply, UPS, wherein the method is applied to a UPS comprising a plurality of power modules which are connected in parallel and a bypass module, the method comprising:
determining that the bypass module in the UPS is operating normally and a current output power of the UPS is less than a preset power; and
controlling a part of the power modules in the UPS to operate in a harmonic compensation mode, controlling at least one power unit in the part of the power modules to be turned off, controlling all of a first-phase output terminal, a second-phase output terminal, and a third-phase output terminal of the part of the power modules after being connected in parallel to have outputs, and controlling the other power modules in the UPS to sleep;
wherein, the power unit comprises an inverter or a rectifier.

2. The method according to claim 1, wherein the power module comprises a first-phase sub-output terminal, a second-phase sub-output terminal, a third-phase sub-output terminal, and a power unit corresponding to a respective phase sub-output terminal, and the controlling at least one power unit in the part of the power modules to be turned off comprises:
for any target power module in the part of the power modules, performing at least one of controlling the power unit corresponding to the first-phase sub-output terminal in the target power module to be turned off, and controlling the power unit corresponding to the second-phase sub-output terminal in the target power module to be turned off.

3. The method according to claim 2, wherein, in a case where the power unit corresponding to the respective phase sub-output terminal comprises a plurality of power units connected in parallel, the controlling at least one power unit in the part of the power modules to be turned off comprises:
for a target power module in the part of the power modules comprising the plurality of power units connected in parallel, controlling at least one power unit corresponding to a target phase sub-output terminal in the target power module to be turned off, wherein the target phase sub-output terminal corresponds to the plurality of power units connected in parallel.

4. The method according to claim 2, wherein, during a process of controlling the power unit corresponding to the first-phase sub-output terminal in the target power module to be turned off, the following steps are cyclically performed:
controlling the power unit corresponding to the second-phase sub-output terminal in the target power module to be turned on, controlling the power unit corresponding to the third-phase sub-output terminal in the target power module to be turned on, and controlling the power unit corresponding to the first-phase sub-output terminal in the target power module to be turned off;
controlling the power unit corresponding to the first-phase sub-output terminal in the target power module to be turned on, controlling the power unit corresponding to the third-phase sub-output terminal in the target power module to keep turned on, and controlling the power unit corresponding to the second-phase sub-output terminal in the target power module to be turned off; and
controlling the power unit corresponding to the second-phase sub-output terminal in the target power module to be turned on, controlling the power unit corresponding to the first-phase sub-output terminal in the target power module to keep turned on, and controlling the power unit corresponding to the third-phase sub-output terminal in the target power module to be turned off.

5. The method according to claim 2, wherein, during a process of controlling the power unit corresponding to the first-phase sub-output terminal in the target power module to be turned off and controlling the power unit corresponding to the second-phase sub-output terminal in the target power module to be turned off, the following steps are cyclically performed:
controlling the power unit corresponding to the third-phase sub-output terminal in the target power module to be turned on, controlling the power unit corresponding to the first-phase sub-output terminal in the target power module to be turned off, and controlling the power unit corresponding to the second-phase sub-output terminal in the target power module to be turned off;
controlling the power unit corresponding to the first-phase sub-output terminal in the target power module to be turned on, controlling the power unit corresponding to the second-phase sub-output terminal in the target power module to keep turned off, and controlling the power unit corresponding to the third-phase sub-output terminal in the target power module to be turned off; and
controlling the power unit corresponding to the second-phase sub-output terminal in the target power module to be turned on, controlling the power unit corresponding to the third-phase sub-output terminal in the target power module to keep turned off, and controlling the power unit corresponding to the first-phase sub-output terminal in the target power module to be turned off.

6. The method according to any one of claims 1 to 5, wherein the controlling a part of the power modules in the UPS to operate in a harmonic compensation mode comprises:
controlling an inverter in the part of the power modules in the UPS to operate; or
controlling a rectifier in the part of the power modules in the UPS to operate.

7. The method according to claim 2, further comprising:
controlling a target heat-dissipation apparatus to be turned off, while performing at least one of controlling the power unit corresponding to the first-phase sub-output terminal in the target power module to be turned off and controlling the power unit corresponding to the second-phase sub-output terminal in the target power module to be turned off, wherein the target heat-dissipation apparatus is a heat-dissipation apparatus corresponding to a turned-off power unit.

8. An apparatus for controlling a UPS, wherein the apparatus is applied to a UPS comprising a plurality of power modules which are connected in parallel and a bypass module, the apparatus comprising:
at least one processor; and a memory communicatively connected to the at least one processor; wherein the memory stores instructions executable by the at least one processor, the instructions, when executed by the at least one processor, cause the at least one processor to perform the following steps:
determining that the bypass module in the UPS is operating normally and a current output power of the UPS is less than a preset power; and
controlling a part of the power modules in the UPS to operate in a harmonic compensation mode, controlling at least one power unit in the part of the power modules to be turned off, controlling all of a first-phase output terminal, a second-phase output terminal, and a third-phase output terminal of the part of the power modules after being connected in parallel to have outputs, and controlling the other power modules in the UPS to sleep;
wherein the power unit comprises an inverter or a rectifier.

9. The apparatus according to claim 8, wherein the power module comprises a first-phase sub-output terminal, a second-phase sub-output terminal, a third-phase sub-output terminal, and a power unit corresponding to a respective phase sub-output terminal, and the processor is configured to:
for any target power module in the part of the power modules, perform at least one of controlling the power unit corresponding to the first-phase sub-output terminal in the target power module to be turned off, and controlling the power unit corresponding to the second-phase sub-output terminal in the target power module to be turned off.

10. The apparatus according to claim 9, wherein, in a case where the power unit corresponding to the respective phase sub-output terminal comprises a plurality of power units connected in parallel, the processor is configured to:
for a target power module in the part of the power modules comprising the plurality of power units connected in parallel, control at least one power unit corresponding to a target phase sub-output terminal in the target power module to be turned off, wherein the target phase sub-output terminal corresponds to the plurality of power units connected in parallel.

11. The apparatus according to claim 9, wherein, during a process of controlling the power unit corresponding to the first-phase sub-output terminal in the target power module to be turned off, the processor cyclically performs the following steps:
controlling the power unit corresponding to the second-phase sub-output terminal in the target power module to be turned on, controlling the power unit corresponding to the third-phase sub-output terminal in the target power module to be turned on, and controlling the power unit corresponding to the first-phase sub-output terminal in the target power module to be turned off;
controlling the power unit corresponding to the first-phase sub-output terminal in the target power module to be turned on, controlling the power unit corresponding to the third-phase sub-output terminal in the target power module to keep turned on, and controlling the power unit corresponding to the second-phase sub-output terminal in the target power module to be turned off; and
controlling the power unit corresponding to the second-phase sub-output terminal in the target power module to be turned on, controlling the power unit corresponding to the first-phase sub-output terminal in the target power module to keep turned on, and controlling the power unit corresponding to the third-phase sub-output terminal in the target power module to be turned off.

12. The apparatus according to claim 9, wherein, during a process of controlling the power unit corresponding to the first-phase sub-output terminal in the target power module to be turned off and controlling the power unit corresponding to the second-phase sub-output terminal in the target power module to be turned off, the processor cyclically performs the following steps:
controlling the power unit corresponding to the third-phase sub-output terminal in the target power module to be turned on, controlling the power unit corresponding to the first-phase sub-output terminal in the target power module to be turned off, and controlling the power unit corresponding to the second-phase sub-output terminal in the target power module to be turned off;
controlling the power unit corresponding to the first-phase sub-output terminal in the target power module to be turned on, controlling the power unit corresponding to the second-phase sub-output terminal in the target power module to keep turned off, and controlling the power unit corresponding to the third-phase sub-output terminal in the target power module to be turned off; and
controlling the power unit corresponding to the second-phase sub-output terminal in the target power module to be turned on, controlling the power unit corresponding to the third-phase sub-output terminal in the target power module to keep turned off, and controlling the power unit corresponding to the first-phase sub-output terminal in the target power module to be turned off.

13. The apparatus according to any one of claims 8 to 12, wherein the processor is configured to:
control an inverter in the part of the power modules in the UPS to operate; or
control a rectifier in the part of the power modules in the UPS to operate.

14. The apparatus according to claim 9, wherein the processor is further configured to:
control a target heat-dissipation apparatus to be turned off, while performing at least one of controlling the power unit corresponding to the first-phase sub-output terminal in the target power module to be turned off and controlling the power unit corresponding to the second-phase sub-output terminal in the target power module to be turned off, wherein the target heat-dissipation apparatus is a heat-dissipation apparatus corresponding to a turned-off power unit.

15. A UPS, comprising a bypass module, a plurality of power modules connected in parallel, and the apparatus for controlling the UPS according to any one of claims 8 to 14.
